# EUROPÄISCHE PATENTSCHRIFT

(11) **EP 1 918 249 B1**
(45) Veröffentlichungstag und Bekanntmachung des Hinweises auf die Patenterteilung: **27.05.2009**
(21) Anmeldenummer: 06405458.8
(22) Anmeldetag: 31.10.2006
(51) Int. Cl.: C01B 31/02

(54) **Werkstoffe enthaltend Kohlenstoffnanoröhrchen, Verfahren zu deren Herstellung und Verwendung der Werkstoffe**
Material comprising carbon nanotubes, a method of its preparation, and its use
Matériau comprenant des nanotubes de carbone, méthode pour sa production et son utilisation

(43) Veröffentlichungstag der Anmeldung: 07.05.2008
(73) Patentinhaber: Alcan Technology & Management Ltd., 8212 Neuhausen am Rheinfall (CH)
(72) Erfinder: Adams, Horst, 9450 Altstätten (CH); Dvorak, Michael, 3608 Thun (CH)

(56) Entgegenhaltungen:
- ESAWI A ET AL: "Dispersion of carbon nanotubes (CNTs) in aluminum powder" COMPOS PART A APPL SCI MANUF; COMPOSITES PART A: APPLIED SCIENCE AND MANUFACTURING FEBRUARY 2007, [Online] Bd. 38, Nr. 2, 23. Juni 2006 (2006-06-23), Seiten 646-650, XP002413866
- EDTMAIER C ET AL: "Aluminium based carbon nanotube composites by mechanical alloying" POWDER METALLURGY WORLD CONGRESS & EXHIBITION (PM2004) 17-21 OCT. 2004 VIENNA, AUSTRIA, 17. Oktober 2004 (2004-10-17), - 21. Oktober 2004 (2004-10-21) Seite 6 pp., XP001248891 Powder Metallurgy World Congress & Exhibition (PM2004) European Powder Metallurgy Assoc Shrewsbury, UK
- GEORGE ET AL: "Strengthening in carbon nanotube/aluminium (CNT/Al) composites" SCRIPTA MATERIALIA, ELSEVIER, AMSTERDAM, NL, Bd. 53, Nr. 10, November 2005 (2005-11), Seiten 1159-1163, XP005045925 ISSN: 1359-6462
- CARRENO-MORELLI E ET AL: "Carbon nanotube/magnesium composites" PHYS STATUS SOLIDI A; PHYSICA STATUS SOLIDI (A) APPLIED RESEARCH JUNE 2004, Bd. 201, Nr. 8, Juni 2004 (2004-06), Seiten R53-R55, XP002413914
- C. EDTMAIER: "Metall-Matrix-Verbundwerkstoffe mit Carbon Nanotubes als hochfeste und hochwärmeleitende Einlagerungsphase"[Online] 3. Juni 2005 (2005-06-03), XP002413867 Gefunden im Internet: URL:http://www.ipp.mpg.de/de/for/bereiche/ material/seminare/MFSem/talks/Edtmaier_03- 06-2005.pdf> [gefunden am 2007-01-09]
- THOSTENSON ET AL: "Nanocomposites in contect" COMPOSITIES SCIENCE AND TECHNOLOGY, Bd. 65, 2005, Seiten 491-516, XP002413915

## Beschreibung

Vorliegende Erfindung betrifft Werkstoffe nach dem Oberbegriff des Anspruchs 1.. Die Erfindung betrifft auch ein Verfahren zur Herstellung der Werkstoffe und die Verwendung der Werkstoffe für Formkörper.

Es sind Kohlenstoffnanoröhrchen bekannt. Weitere äquivalente Begriffe für Kohlenstoffnanoröhrchen sind nanoskalige Kohlenstoffröhrchen oder Carbon Nano Tubes und die Kurzbezeichnung "CNT". Nachfolgend wird die in der Fachwelt gebräuchlichste Form, nämlich "CNT", weiterverwendet. Die CNT stellen Fullerene dar und sind Kohlenstoffmodifikationen mit geschlossener polyedrischer Struktur. Bekannte Anwendungsgebiete für CNT sind im Bereich der Halbleiter zu finden oder zur Verbesserung der mechanischer Eigenschaften von herkömmlichen Kunststoffen (www.de.wikipedia.org unter "Kohlenstoffnanoröhre").

Der Artikel von Esawi A. et al., "Dispersion of carbon nanotubes (CNTs) in aluminum powder", Composites Part A: applied science and manufacturing, Composites: Part A 38 (2007), Seiten 646-650, offenbart ein Verfahren zur Herstellung eines Werkstoffes für Verbundstoffe bzw. Formkörper, bei dem Aluminium und MWCNT (multi wall CNT) in Form von Pulvern durch mechanisches Legieren verarbeitet werden. Ein Werkstoff aus Aluminium mit 2 Gew.-% CNT in Form von Partikeln weist eine Partikelgrösse kleiner 2000 µm auf. Der Werkstoff zeigt eine schichtähnliche Struktur, wobei das Metall in Lagen abwechslungsweise mit Lagen aus CNT geschichtet ist.

Der Artikel von Edtmaier C. et al., "Aluminium based carbon nanotube composites by mechanical allcying", Powder Metallurgy World Congress & Exhibition, 17.-21. Oktober 2004, Wien, Österreich, beschreibt durch mechanisches Legieren hergestellte Verbundmaterialien auf der Basis von Aluminium mit 1 und 3 Gew.-% CNF (carbon nanofibres). Die gemahlenen Partikel werden kompaktiert und durch Extrusion geformt.

Aufgabe vorliegender Erfindung ist es, den Einsatzbereich der CNT zu erweitern und neue Werkstoffe sowie Formkörper daraus, vorzuschlagen.

Erfindungsgemäss wird dies durch Werkstoffe mit den Merkmalen des Anspruchs 1 erreicht.

Der Werkstoff liegt vorteilhaft in körniger Form oder in Form von Partikeln vor, wobei die Partikelgrösse von 0,5 µm bis 2000 µm, vorteilhaft von 1 µm bis 1000 µm, beträgt. Die einzelnen Lagen oder Schichten des Metalls oder Polymers weisen eine Dicke von 10 nm bis 500'000 nm, vorteilhaft von 20 nm bis 200'000 nm, auf. Die Dicken der einzelnen Lagen oder Schichten der CNT betragen 10 nm bis 100'000 nm, vorteilhaft 20 nm bis 50'000 nm.

Als Metalle eignen sich Metalle, wie Eisen- und Nichteisenmetalle sowie Edelmetalle. Geeignete Eisenmetalle sind Eisen, Kobalt und Nickel, deren Legierungen sowie Stähle. Zu den Nichteisenmetallen können das Aluminium, Magnesium und Titan etc. sowie deren Legierungen aufgezählt werden. Als weitere Beispiele von Metallen können Vanadium, Chrom, Mangan, Kupfer, Zink, Zinn, Tantal oder Wolfram sowie Legierungen davon oder die Legierungen Messing und Bronze, genannt werden. Es können auch Rhodium, Palladium, Platin, Gold und Silber eingesetzt werden. Die genannten Metalle können sortenrein oder in Gemischen untereinander angewendet werden. Aluminium und dessen Legierungen sind bevorzugt. Neben Reinaluminium sind die Legierungen des Aluminiums bevorzugt. Das Metall wird körnig oder in Granulat- oder Pulverform im erfindungsgemässen Verfahren eingesetzt. Typische Korngrössen der Metalle sind von 5 µm bis 1000 µm und zweckmässig von 15 µm bis 1000 µm.

Als Polymere eignen sich thermoplastische, elastische oder duroplastische Polymere. Beispiele sind Polyolefine, wie Polypropylen oder Polyethylen, Cycloolefin-Copolymere, Polyamide, wie die Polyamide 6, 12, 66, 610 oder 612, Polyester, wie Polyethylenterephtalat, Polyacrylnitril, Polystyrole, Polycarbonate, Polyvinylchlorid, Polyvinylacetat, Styrol-Butadien-Copolymere, Acrylnitril-Butadien-Copolymere, Polyurethane, Polyacrylate und Copolymere, Alkydharze, Epoxide, Phenol-Formaldehydharze, Harnstoff-Formaldehydharze usw. Die Polymere werden sortenrein oder im Gemisch untereinander oder im Gemisch mit Metall, jeweils körnig oder in Granulat- oder Pulverform im erfindungsgemässen Verfahren eingesetzt. Typische Korngrössen der Polymere sind von 5 µm bis 1000 µm und zweckmässig von 15 µm bis 1000 µm.

Als CNT können beispielsweise katalytisch, im Lichtbogen, mittels Laser oder durch Gaszersetzung erzeugte Materialien verwendet werden. Die CNT können einwandig oder mehrwandig, wie zweiwandig, sein. Die CNT können offene oder geschlossene Röhren sein. Die CNT können beispielsweise von 0,4 nm (Nanometer) bis 50 nm Durchmesser und eine Länge von 5 nm bis 50'000 nm aufweisen. Die CNT können auch schwammähnliche Gebilde, d.h. 2- oder 3-dimensionale Gerüstkörper, aus gegenseitig vernetzten Kohlenstoffnanoröhrchen darstellen. Der Durchmesser der einzelnen Röhrchen bewegt sich dabei im oben angegebenen Bereich von z.B. 0,4 nm bis 50 nm. Die Ausdehnung der Schwammstruktur, d.h. die Seitenlängen eines Gerüstkörpers aus CNT, kann beispielhaft mit 10 nm bis 50'000 nm, vorteilhaft mit 1'000 nm bis 50'000 nm in jeder der Dimensionen angegeben werden.

Der Werkstoff nach vorliegender Erfindung kann beispielsweise 0,1 bis 50 Gew.-%, bezogen auf den Werkstoff, CNT enthalten. Zweckmässig sind Mengen von 0,3 bis 40 Gew.-%, bevorzugt von 0,5 bis 20 Gew.-% und insbesondere 1 bis 10 Gew.-% CNT im Werkstoff enthalten. Stellt Aluminium oder eine Aluminiumlegierung das Metall des Werkstoffes dar, so kann der Werkstoff zweckmässig 0,5 bis 20 Gew.-% CNT, bezogen auf den Werkstoff, enthalten, wobei 3 bis 17 Gew.-% CNT bevorzugt und 3 bis 6 Gew.-% CNT besonders bevorzugt werden.

Die Werkstoffe können aus den genannten Metallen und den genannten CNT bestehen, sie können aus den genannten Metallen, Polymeren und CNT bestehen oder können aus den genannten Polymeren und CNT bestehen oder die vorstehend angeführten Werkstoffe können zusätzliche Beimengungen, beispielsweise funktionelle Beimengungen, enthalten. Funktionelle Beimengungen sind beispielsweise Kohlenstoff, auch in Russ-, Graphit- und Diamantmodifikation, Gläser, Kohlenstofffasern, Kunststofffasern, anorganische Fasern, Glasfasern, Silikate, keramische Materialien, Carbide oder Nitride des Aluminiums oder Siliciums, wie Aluminiumcarbid, Aluminiumnitrid, Siliciumcarbid oder Siliciumnitrid, beispielsweise auch in Faserform, sog. Whiskers.

Die erfindungsgemässen Werkstoffe sind herstellbar durch mechanisches Legieren ("mechanical alloying") der jeweiligen Anteile von Metall, Polymer und CNT. Mechanisches Legieren ist ausführbar durch wiederholte Deformation, Brechen und Schweissen von pulverigen Partikeln aus dem Metall oder dem Polymer und den CNT. Erfindungsgemäss besonders geeignet zum mechanischen Legieren sind Kugelmühlen mit hochenergetischen Kugelkollisionen. Einen geeigneten Energieeintrag wird beispielsweise in Kugelmühlen erreicht, deren Mahlkammer einen zylinderförmigen, vorzugsweise kreiszylinderförmigen, Querschnitt aufweist und die Mahlkammer, im Regelfalle, in horizontaler Lage angeordnet ist. Das Mahlgut und die Mahlkugeln können durch die sich um ihre Zylinderachse drehende Mahlkammer bewegt und durch einen sich in Richtung der Zylinderachse in die Mahlkammer erstreckenden, mit einer Mehrzahl von Nocken ausgestatteten angetriebenen Drehkörper zusätzlich weiter beschleunigt werden. Die Geschwindigkeit der Mahlkugeln wird vorteilhaft auf 4 m/s und höher, zweckmässig auf 11 m/s und höher eingestellt. Vorteilhaft sind Geschwindigkeiten der Mahlkugeln von 11 bis 14 m/s. Ebenfalls vorteilhaft ist ein Drehkörper, dessen Mehrzahl von Nocken über die ganze Länge verteilt angeordnet sind. Die Nocken können sich beispielsweise über 1/10 bis 9/10, vorzugsweise 4/10 bis 8/10, des Radius der Mahlkammer erstrecken. Auch vorteilhaft ist ein Drehkörper, der sich über die ganze Ausdehnung der Mahlkammer in der Zylinderachse erstreckt. Der Drehkörper wird, wie auch die Mahlkammer, unabhängig voneinander oder synchron angetrieben, von einem Aussenantrieb in Bewegung gesetzt. Die Mahlkammer und der Drehkörper können gleichläufig oder bevorzugt gegenläufig drehen. Die Mahlkammer kann evakuiert und der Mahlprozess im Vakuum betrieben werden oder die Mahlkammer kann mit einem Schutz- oder Inertgas befüllt und betrieben werden. Beispiele von Schutzgasen sind z.B. N₂, CO₂, von Inertgasen He oder Ar. Die Mahlkammer und damit das Mahlgut kann beheizt oder gekühlt werden. Fallweise kann kryogen gemahlen werden.

Typisch ist eine Mahldauer von 10 Stunden und weniger. Die minimale Mahldauer beträgt zweckmässig 15 min. Bevorzugt ist eine Mahldauer zwischen 15 min und 5 Stunden. Besonders bevorzugt ist eine Mahldauer von 30 min bis 3 Stunden, insbesondere bis 2 Stunden.

Die Kugelkollisionen sind der hauptsächliche Grund für den Energietransfer. Der Energietransfer lässt sich ausdrücken durch die Formel Eₖᵢₙ = mv², wobei m die Masse der Kugel ist und v die relative Geschwindigkeit der Kugel bedeutet. Das mechanische Legieren in der Kugelmühle wird in der Regel mit Stahlkugeln, beispielsweise mit einem Durchmesser von 2,5 mm und einem Gewicht von ca. 50 g oder mit Zirkonoxidkugeln (ZrO₂) gleichen Durchmessers mit einem Gewicht von 0,4 g, durchgeführt.

Entsprechend dem Energieeintrag in die Kugelmühle können Werkstoffe mit bevorzugter Verteilung der Lagen aus Metall oder Polymer und CNT erzeugt werden. Mit zunehmendem Energieeintrag kann die Dicke der einzelnen Lagen verändert werden. Neben dem Energieeintrag kann durch die Dicke der dem Mahlprozess zugeführten CNT-Struktur die Dicke der CNT-Lagen im gemahlenen Werkstoff gesteuert werden. Mit zunehmendem Energieeintrag kann die Dicke der einzelnen Lagen reduziert und jeweilige Lage bezüglich der Ausdehnung in der Fläche vergrössert werden. Durch die zunehmende Ausdehnung in der Fläche können sich beispielsweise einzelne Lagen aus CNT berühren bis hin zu in zwei Dimensionen durchgehenden CNT-Schichten oder durchgehend in zwei Dimensionen sich berührende CNT-Lagen durch ein Partikel hindurch. Damit gelingt es die hervorragenden Eigenschaften der CNT, beispielsweise die Wärmeleitfähigkeit und die elektrische Leitfähigkeit der CNT, einerseits und die Duktilität des Metalls oder die Elastizität des Polymers andererseits, im erfindungsgemässen Werkstoff im wesentlichen beizubehalten.

Eine weitere Steuerung der Eigenschaften der erfindungsgemässen Werkstoffe kann durch mischen von zwei oder mehreren Werkstoffen unterschiedlichen Ausgangsmaterials und/oder Energieeintrags bei deren Erzeugung erzielt werden. Es können auch Materialien, wie Metall oder Kunststoff, frei von CNT, und ein oder mehrere CNT enthaltende Werkstoffe gemischt oder mechanisch legiert, d.h. gemahlen werden. Die unterschiedlichen Werkstoffe, fallweise mit den Materialien, können gemischt oder einer zweiten Mahlung oder mehreren Mahlungen unterzogen werden. Die zweite Mahlung oder darauf folgende Mahlungen können beispielsweise eine Mahldauer von 10 Stunden und weniger dauern. Die minimale Zeitdauer der zweiten Mahlung beträgt zweckmässig 5 min. Bevorzugt ist eine zweite Mahldauer zwischen 10 min und 5 Stunden. Besonders bevorzugt ist eine zweite Mahldauer von 15 min bis 3 Stunden, insbesondere bis 2 Stunden.

Beispielsweise kann ein erfindungsgemässer Werkstoff hohen CNT-Gehaltes und ein Werkstoff geringeren CNT-Gehaltes oder Werkstoffe unterschiedlichen Energieeintrages, in einem zweiten Mahlvorgang verarbeitet werden. Auch kann ein CNT enthaltender Werkstoff, wie ein CNT-haltiges Metall, z.B. Aluminium, mit einem CNT-freien Metall, z.B. ebenfalls Aluminium, in einem zweiten Mahlvorgang verarbeitet werden. Der zweite oder Mahlvorgang oder mehrere Mahlvorgänge, resp. das mechanische Legieren, wird dabei nur soweit geführt, dass der resultierende Werkstoff nicht vollständig homogenisiert wird, sondern die jedem Werkstoff oder Material innewohnenden Eigenschaften erhalten bleiben und sich die Wirkungen im endgültigen Werkstoff ergänzen.

Mit dem beschriebenen Verfahren können die den CNT innewohnenden Eigenschaften, die an sich eine gezielte Verarbeitung verunmöglichen, wie ein geringeres spezifisches Gewicht gegenüber dem spezifischen Gewicht von Metallen und die schlechte Benetzbarkeit der CNT durch Metalle, überwunden werden. So können als Beispiel für die unterschiedliche Dichte für Aluminium 2,7 g/cm³ und für die CNT 1,3 g/cm³ angegeben werden.

Die erfindungsgemässen Werkstoffe finden z.B. Verwendung in Formkörpern, einschliesslich Halbzeuge und Schichten, die durch Sprühkompaktieren, thermische Spritzverfahren, Plasmasprühen, Extrusionsverfahren, Sinterverfahren, druckgesteuerte Infiltrationsverfahren oder Pressgiessen hergestellt sind.

Vorliegende erfindungsgemässe Werkstoffe sind demnach beispielsweise durch Sprühkompaktieren zu Formkörpern verarbeitbar. Beim Sprühkompaktieren wird eine Metallschmelze, Schmelze aus beispielsweise eine Stahl, Magnesium oder bevorzugt Aluminium oder einer Aluminiumlegierung, über einen beheizten Tiegel einem Sprühkopf zugeführt, dort zu feinen Tröpfchen zerstäubt und auf ein Substrat oder Unterlage gesprüht. Die zunächst noch schmelzflüssigen Tröpfchen kühlen sich während des Fluges von der Zerstäubungseinrichtung bis zum tiefer gelegenen Substrat ab. Der Partikelstrom trifft dort mit hoher Geschwindigkeit auf, um zu dem so genannten Deposit aufzuwachsen und dabei gänzlich zu erstarren und weiter abzukühlen. Beim Sprühkompaktieren nutzt man für den Formgebungsprozess den besonderen, als Zustand kaum exakt zu definierenden Phasenübergang "flüssig zu fest" von kleinen, zu einem geschlossenen Materialverbund zusammenwachsenden, Schmelzepartikeln. In vorliegendem Fall wird der erfindungsgemässe Werkstoff, enthaltend die CNT in Pulverform der Zerstäubungseinrichtung zugeführt und feinen Metalltröpfchen aus dem Verdüsungsprozess der Metallschmelze versprüht. Die Prozessführung ist derart, dass die CNT enthaltenden Werkstoffe nicht oder nur an der Oberfläche angeschmolzen werden und eine Entmischung nicht erfolgt. Der Partikelstrom aus Werkstoff und Metalltröpfchen trifft auf dem Substrat mit hoher Geschwindigkeit auf und wächst zum Deposit auf. Entsprechend dem Substrat, wie Drehteller, Drehstab oder Tisch, können als Formkörper Vollkörper, wie Bolzen, Hohlkörper, wie Rohre oder Materialstreifen, wie Bleche oder Profile, gefertigt werden. Das Deposit ist ein inniges und homogenes Gemisch von Metall mit eingelagerten CNT mit der gewünschten gleichförmigen Anordnung der Bestandteile in der Struktur. Beispielsweise kann das Deposit in Form eines Bolzens anfallen. In nachfolgenden Behandlungsschritten, wie einer Extrusion eines Bolzens können hochkompakte und Fehlstellen freie Halbzeuge (Rohre, Bleche etc.) oder Formkörper mit einer Lamellenstruktur erzeugt werden. Die Halbzeuge und Formkörper weisen z.B. eine mehr oder weniger ausgeprägte Anisotropie in der Struktur und mechanischen und physikalischen Eigenschaften, wie elektrische Leitfähigkeit, Wärmeleitfähigkeit, Festigkeit und Duktilität auf. Weitere Anwendungen der erfindungsgemässen Werkstoffe liegen im Bereich der Neutronenfänger, der Strahlenmoderierung oder der Erzeugung von Schichten zum Strahlenschutz.

Vorliegende Werkstoffe lassen in anderer Weise die Verwendung als Formkörper oder Schicht zu, wobei die Formkörper durch thermische Spritzverfahren wie dem Plasmaspritzen (Plasmaspraying) oder dem Kaltgasspritzen (Cold Gas Spraying) erzeugt werden. Bei den thermischen Spritzverfahren werden pulverförmige Werkstoffe in eine Energiequelle injiziert und dort je nach Verfahrensvariante nur erwärmt, angeschmolzen oder vollständig aufgeschmolzen und auf hohe Geschwindigkeiten (je nach Verfahren und Parameterwahl von einigen m/s bis hin zu 1500 m/s) in Richtung der zu beschichtenden Oberfläche beschleunigt, wo sich die auftreffenden Partikel als Schicht niederschlagen. Treffen die idealerweise erwärmten bzw. nur an der Oberfläche angeschmolzenen Partikel auf dem Substrat mit sehr hoher kinetischer Energie auf, legen sich die CNT vorzugsweise in die Tröpfchenebene, d.h. quer zur Strahl- und Aufprallrichtung. Dies führt zu einer kontrollierten Anisotropie der Materialeigenschaften, wie der Zugfestigkeit.

Die dieser Erfindung zugrunde liegenden CNT-haltigen Werkstoffe können auch durch Extrusionsverfahren, Sinterverfahren oder Druckgiessverfahren zu Formkörpern weiterverarbeitet werden. Beim Press- oder Druckgiessen wird eine langsame, insbesondere laminare, kontinuierliche Formfüllung bei hohen Metalldrücken angestrebt. Es können beispielsweise Verbundwerkstoffe durch Infiltration poröser Faser- oder Partikelformkörper durch ein verflüssigtes Metall erzeugt werden.

In vorliegendem Press- oder Druckgiessverfahren wird zweckmässig der erfindungsgemässe Werkstoff, aus dem die CNT enthaltenden Metall in einer Giessform als pulverförmiger Matrixwerkstoff vorgelegt. Es wird ein Metall, dessen Schmelzpunkt unter demjenigen des Werkstoffes liegt, beispielsweise bei aluminiumhaltigen Werkstoffen ein Metall mit einer Schmelzetemperatur von unter 750°C, langsam in die beheizte Giessform eingepresst. Das flüssige Metall durchdringt den pulverförmigen Matrixwerkstoff unter dem angelegten Druck. Danach kann die Giessform gekühlt und der Formkörper entformt werden. Das Verfahren kann auch kontinuierlich durchgeführt werden. In einer Ausführungsvariante kann das Metall, z.B. Aluminium, zu thixotropes Verhalten zeigenden Vorprodukten verarbeitet und die CNT inkorporiert werden. Anstelle verflüssigten Metalls kann ein vorerhitztes im Zustand thixotropen (teils flüssig/teils fest) Verhaltens befindliches Metall, enthaltend die CNT, in der Giessform eingepresst werden. Es ist auch möglich, den Werkstoff in Partikel- oder Granulatform, wobei in den einzelnen Partikeln das Metall in Lagen abwechslungsweise mit Lagen aus CNT geschichtet ist, als Haufwerk in die Giessform einzufüllen, die Giessform zu beheizen und unter Druck eine vollständige Formfüllung ohne Poren und Lunker im entstehenden Formkörper zu erreichen. Schliesslich können grob gemischtes Metallpulver, z.B. Aluminiumpulver oder thixotrope Eigenschaften aufweisendes Aluminium, und CNT, die CNT in Schwammform oder als Cluster mit einem Durchmesser von beispielsweise bis zu 0,5 mm, grob gemischt und in der Giessform unter Wärmeeinwirkung zum Schmelzen des Metalls verpresst werden. Mit den Pressgiessverfahren können günstig Formkörper, beispielsweise stabförmige Formkörper, diskontinuierlich oder kontinuierlich, erzeugt werden. Aluminium mit thixotropen Eigenschaften ist beispielsweise erhältlich durch Schmelzen von Aluminium oder Aluminiumlegierungen und rasches Abkühlen unter stetem Rühren bis zur Erstarrung.

Die erfindungsgemässen Werkstoffe und Formkörper daraus weisen eine gute Temperaturleitfähigkeit und elektrische Leitfähigkeit auf. Das Temperaturverhalten von Formkörpern aus den erfindungsgemässen Werkstoffen ist hervorragend. Die thermische Expansion ist gering. Die Kriechdehnung verbessert sich. Durch den Zusatz der CNT zu den Metallen, wie Aluminium, kann eine wesentliche Verfeinerung der Kornstruktur auf beispielsweise 0,6 - 0,7 µm beobachtet werden. Die Zugabe der CNT zu den Metallen kann eine Rekristallisation des Metalls beeinflussen, resp. verhindern. Auch eine Rissausbreitung kann durch die CNT im Metall reduziert oder verhindert werden.

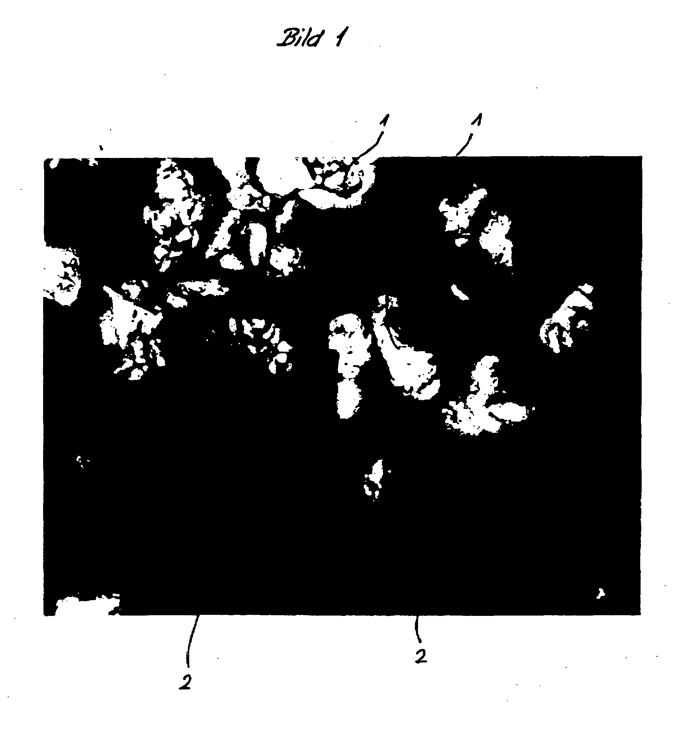

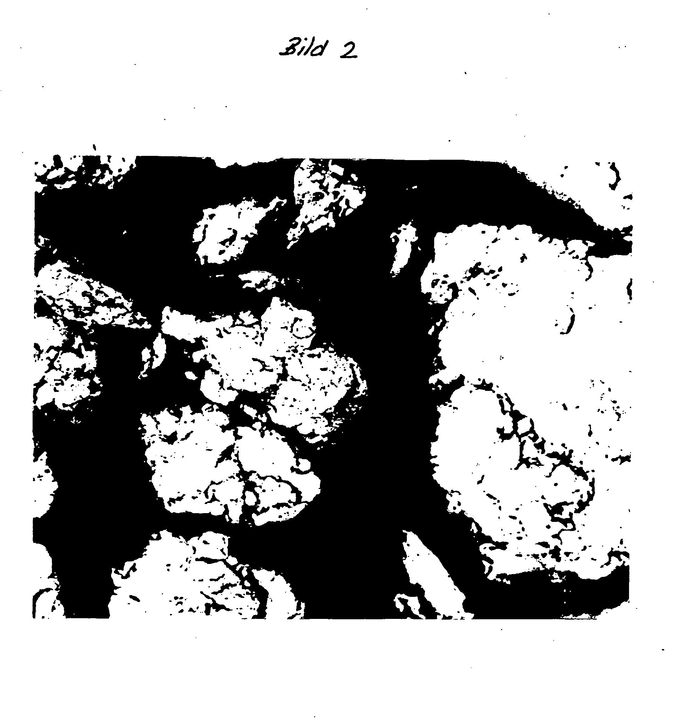

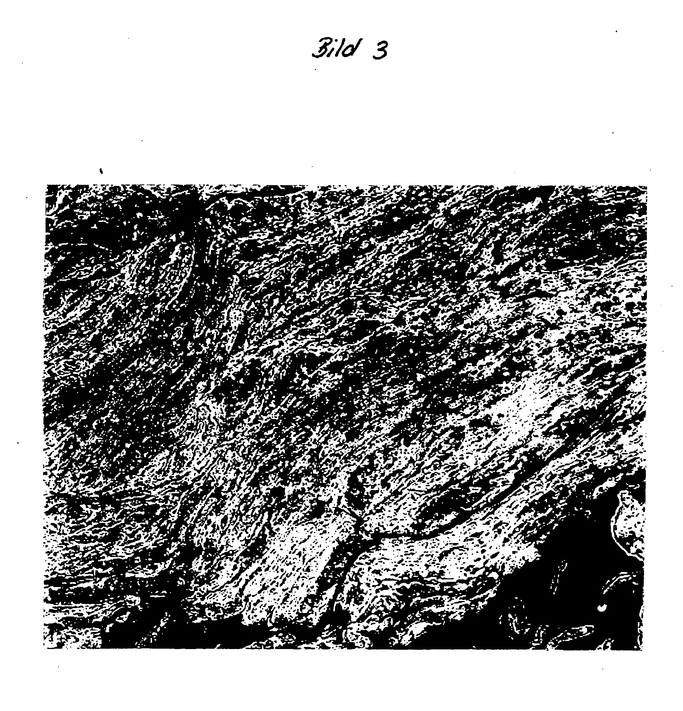

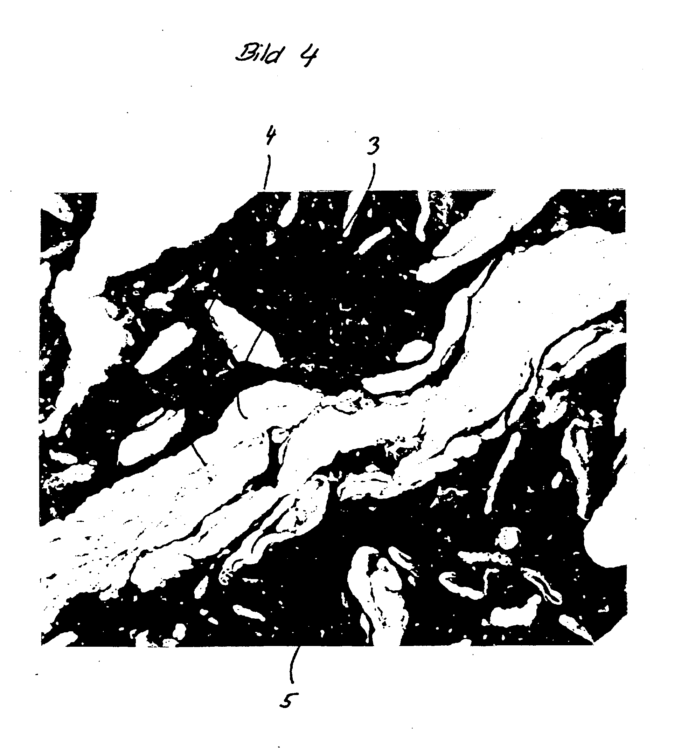

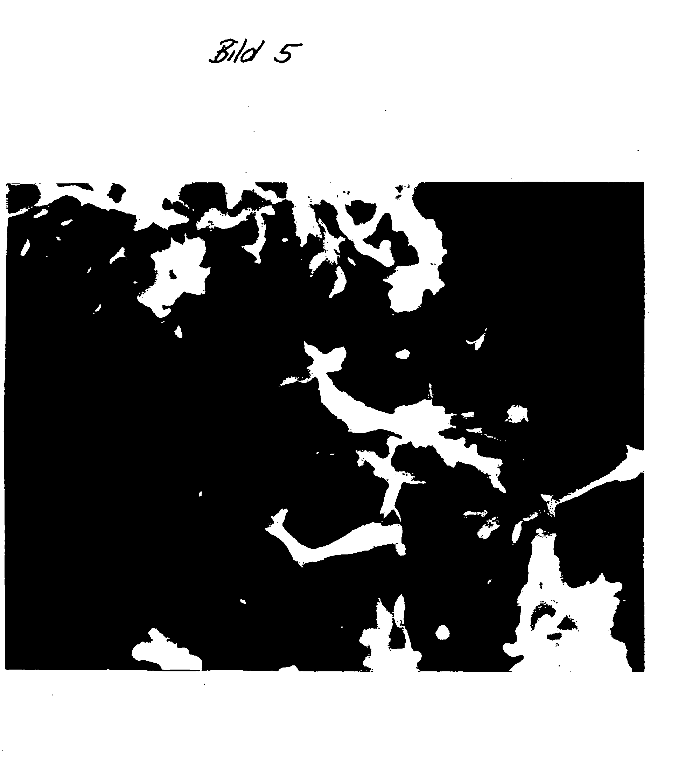

Die Abbildungen 1 bis 5 zeigen die Ausgangsprodukte und den fertige Werkstoffe durch ein Mikroskop gesehen, jeweils in starker Vergrösserung.

Bild 1 zeigt eine Mischung von Aluminiumpartikeln und CNT-Agglomeraten in Vergrösserung. Die hellen Aluminiumpartikel sind mit (1) bezeichnet, die dunklen CNT- Agglomerate sind mit (2) bezeichnet.

Bild 2 zeigt in Vergrösserung den erfindungsgemässen Werkstoff in Pulver-oder Partikelform nach dem mechanischen Legieren. Es sind keine freien CNT sichtbar. Alle CNT sind in den Aluminiumpartikeln, die vielfach deformiert, gebrochen und verschweisst worden sind, aufgenommen.

Bild 3 zeigt den Schnitt durch einen Werkstoff. Innerhalb eines Partikels des Werkstoffes ist eine Schichtstruktur, resp. es sind Lagen, erkennbar. Es sind dies die Schichten oder Lagen von wechselweise im Bild grau getöntem Aluminiummetall und hell/dunklen linienförmigen Einlagerungen von CNT sichtbar.

Bild 4 zeigt den Schnitt durch einen Werkstoff. Innerhalb eines Partikels des Werkstoffes ist eine Schichtstruktur, resp. es sind Lagen, erkennbar. Es sind dies die Schichten oder Lagen von wechselweise Aluminiummetall (3), als helle Struktur und CNT (4) als dunkle linienförmige Einlagerungen im Aluminium sichtbar. Gegenüber dem Werkstoff gemäss Bild 3 weist der Werkstoff in Bild 4 geringere Anteile an CNT auf, die durch dickere Lagen von Aluminium getrennt sind. Die grauen Flächen (5), welche die Partikel umgeben, bilden das Harz ab, in welches der Werkstoff zur mikroskopischen Aufnahme eingebettet ist.

Bild 5 zeigt eine Schwammstruktur aus CNT, wie sie beispielsweise zur Herstellung vorliegender Werkstoffe eingesetzt werden kann. Auch eingesetzt werden kann eine derartige Schwammstruktur z.B. im Pressgiessverfahren.

### Beispiele:

Durch mechanisches Legieren eines Pulvers aus reinem Aluminium und CNT durch hochenergetisches mahlen in einer Kugelmühle, wobei eine Kugelgeschwindigkeit von über 11 m/s erreicht wird, werden durch verschiedene Mahldauer verschiedene Werkstoffe hergestellt. Die Werkstoffe werden in einem Pulverextrusionsverfahren weiter verarbeitet und es wird eine Reihe von stabförmigen Probekörpern hergestellt. Die Probekörper werden den in der Tabelle aufgeführten Prüfungen unterzogen. Die Temperaturangabe in der Tabelle bedeutet die Verarbeitungstemperatur während dem Extrusionsverfahren. Die Probekörper enthalten 6 Gew.-% CNT. Die Zeitangaben 30, 60 und 120 min geben die Mahldauer beim mechanischen Legieren zur Herstellung der Werkstoffe an. Beispiel 1 ist ein Vergleichsversuch mit reinem Aluminium, ohne CNT.

| Beispiel Nr.: | Zugfestigkeit N/mm² | Härte Brinell | Elast.-Modul* KN/mm² |
|---|---|---|---|
| Literatur, reines Al (bulk) | 70-100 | 35,9 | 70 |
| Bsp. 1, reines Al, 630°C | 138-142 | 40,1 | 71-81 |
| Bsp. 2, 30min, 630°C | 222-231 | 66,4 | 98-101 |
| Bsp. 3, 60 min, 645°C | 236-241 | 71,1 | 71-78 |
| Bsp. 4, 120 min, 645°C | 427-471 | 160,2 | 114-125 |

| | | | |
|---|---|---|---|
| *Elastizitätsmodul | | | |

Es ist aus der Tabelle ersichtlich, dass sich die Zugfestigkeit und Härte jeweils um ca. 400% erhöht. Die Werte können durch den Gehalt an CNT im Werkstoff und den Mahlprozess, wie die Mahldauer, zur Herstellung des Werkstoffes gesteuert werden. Der Elastizitätsmodul kann sich um 80% erhöhen. Der Elastizitätsmodul kann durch die Mahldauer während des mechanischen Legierens bei der Herstellung des Werkstoffes und durch die Verarbeitungstemperatur beim Extrusionsverfahren beeinflussen.

## Patentansprüche

1. Werkstoff enthaltend Kohlenstoffnanoröhrchen (CNT) und wenigstens ein Metall und/oder wenigstens einen Kunststoff, im Werkstoff in Lagen abwechslungsweise mit Lagen aus CNT geschichtet,
**dadurch gekennzeichnet, dass**
die einzelnen Lagen des Metalls und/oder des Kunststoffes eine Dicke von 10 nm bis 500'000 nm aufweisen und die Dicken der einzelnen Lagen der CNT 10 nm bis 100'000 nm betragen.

2. Werkstoff gemäss Anspruch 1, **dadurch gekennzeichnet, dass** der Werkstoff in Form von Partikeln vorliegt.

3. Werkstoff gemäss Ansprüchen 1 und 2, **dadurch gekennzeichnet, dass,** die Partikelgrösse des Werkstoffes 0,5 µm bis 2000 µm, vorteilhaft 1 µm bis 1000 µm, beträgt.

4. Werkstoff gemäss Ansprüchen 1 bis 3, **dadurch gekennzeichnet, dass** die einzelnen Lagen des Metalls oder des Kunststoffes eine Dicke von 20 nm bis 200'000 nm aufweisen.

5. Werkstoff gemäss Ansprüchen 1 bis 4, **dadurch gekennzeichnet, dass** die Dicken der einzelnen Lagen der CNT 20 nm bis 50'000 betragen.

6. Werkstoff gemäss Ansprüchen 1 bis 5, **dadurch gekennzeichnet, dass** innerhalb der Partikel des Werkstoffes wenigstens ein Metall oder Kunststoff in Lagen abwechslungsweise mit Lagen aus CNT in gleichmässig angeordneter Lagendicke geschichtet sind.

7. Werkstoff gemäss Ansprüchen 1 bis 5, **dadurch gekennzeichnet, dass** handen sind.

8. Werkstoff gemäss Ansprüchen 1 bis 7, **dadurch gekennzeichnet, dass** durch die Partikel des Werkstoffes hindurch mehrere CNT-Lagen in Teilbereichen sich berühren und durch den Partikel hindurch ununterbrochene CNT-Durchdringungen ausbilden.

9. Werkstoff gemäss Ansprüchen 1 bis 8, **dadurch gekennzeichnet, dass** als Metalle Eisen- und Nichteisenmetalle, Edelmetalle, zweckmässig Eisenmetalle aus der Reihe des Eisens, Kobalts und Nickels, deren Legierungen sowie Stähle, Nichteisenmetallen, zweckmässig Aluminium, Magnesium und Titan sowie deren Legierungen, Metalle aus der Reihe Vanadium, Chrom, Mangan, Kupfer, Zink, Zinn, Tantal oder Wolfram und Legierungen davon oder die Legierungen aus der Reihe von Messing und Bronze oder Metalle aus der Reihe Rhodium, Palladium, Platin, Gold und Silber, sortenrein oder in Mischung untereinander, enthalten sind.

10. Werkstoff gemäss Ansprüchen 1 bis 8, **dadurch gekennzeichnet, dass** als Polymere thermoplastische, elastische oder duroplastische Polymere, vorzugsweise Polyolefine, Cycloolefin-Copolymere, Polyamide, Polyester, Polyacrylnitril, Polystyrole, Polycarbonate, Polyvinylchlorid, Polyvinylacetat, Styrol-Butadien-Copolymere, Acrylnitril-Butadien-Copolymere, Polyurethane, Polyacrylate und Copolymere, Alkydharze, Epoxide, Phenol-Formaldehydharze, Harnstoff-Formaldehydharze, sortenrein oder im Gemisch untereinander enthalten sind.

11. Werkstoff gemäss Ansprüchen 1 bis 9, **dadurch gekennzeichnet, dass** als Metall Aluminium oder dessen Legierungen eingesetzt werden.

12. Werkstoff gemäss Ansprüchen 1 bis 11, **dadurch gekennzeichnet, dass** die CNT einen Durchmesser von 0,4 nm bis 50 nm und eine Länge von 5 nm bis 50'000 nm aufweisen.

13. Werkstoff gemäss Ansprüchen 1 bis 12, **dadurch gekennzeichnet, dass** die CNT 2- oder 3-dimensionale Gerüstkörper, aus Kohlenstoffnanoröhrchen darstellen, vorzugsweise Gerüstkörper mit Seitenlängen von 10 nm bis 50'000 nm.

14. Werkstoff gemäss Ansprüchen 1 bis 13, **dadurch gekennzeichnet, dass** der Werkstoff Mengen an CNT von 0,1 bis 50 Gew.-%, bezogen auf den Werkstoff, zweckmässig Mengen an CNT von 0,3 bis 40 Gew.-%, bevorzugt Mengen an CNT von 0,5 bis 20 Gew.-% und insbesondere Mengen an CNT von 1 bis 6 Gew.-% enthält.

15. Werkstoff gemäss Ansprüchen 1 bis 14, **dadurch gekennzeichnet, dass** Aluminium oder eine Aluminiumlegierung das Metall des Werkstoffes darstellt und der Werkstoff 0,5 bis 10 Gew.% CNT, bevorzugt 3 bis 6 Gew.-%, CNT enthält.

16. Verfahren zur Herstellung eines Werkstoffes nach Anspruch 1, **dadurch gekennzeichnet, dass** die Anteile von Metall und/oder Kunststoff und CNT jeweils in Form von Granulaten, Partikeln oder Pulvern durch mechanisches Legieren verarbeitet werden.

17. Verfahren zur Herstellung eines Werkstoffes nach Anspruch 16, **dadurch gekennzeichnet, dass** das mechanische Legieren ist durch wiederholte Deformation, Brechen und Schweissen der Partikel aus Metall oder Kunststoff und Partikel aus CNT, vorzugsweise durch mechanische Legieren in einer Kugelmühle enthaltend eine Mahlkammer und Mahlkugeln als Mahlkörper durch hochenergetische Kugelkollisionen ausgeführt wird.

18. Verfahren zur Herstellung eines Werkstoffes nach Ansprüchen 16 und 17, **dadurch gekennzeichnet, dass** die Kugelmühle eine Mahlkammer mit einem zylinderförmigen, vorzugsweise kreiszylinderförmigen, Querschnitt aufweist und die Mahlkugeln durch die sich um ihre Zylinderachse drehende Mahlkammer bewegt und durch einen sich in Richtung der Zylinderachse in die Mahlkammer erstreckenden, mit einer Mehrzahl von Nocken ausgestatteten, angetriebenen Drehkörper beschleunigt werden.

19. Verfahren zur Herstellung eines Werkstoffes nach Ansprüchen 16 bis 18, **dadurch gekennzeichnet, dass** die Geschwindigkeit der Mahlkugeln wenigstens 11 m/s beträgt und vorteilhaft die Geschwindigkeit der Mahlkugeln von 11 bis 14 m/s beträgt.

20. Verfahren zur Herstellung eines Werkstoffes nach Ansprüchen 16 bis 19, **dadurch gekennzeichnet, dass** die Mahldauer 10 Stunden und weniger und die minimale Mahldauer 5 min beträgt und bevorzugt die Mahldauer zwischen 15 min und 5 Stunden, besonders bevorzugt von 30 min bis 3 Stunden und insbesondere bis 2 Stunden beträgt.

21. Verfahren zur Herstellung eines Werkstoffes nach Ansprüchen 16 bis 20, **dadurch gekennzeichnet, dass** der Drehkörper, eine Mehrzahl von Nocken über die ganze Länge verteilt aufweist und sich vorteilhaft über die ganze Ausdehnung der Mahlkammer in Zylinderachse erstreckt.

22. Verfahren zur Herstellung eines Werkstoffes nach Ansprüchen 16 bis 21, **dadurch gekennzeichnet, dass** zwei oder mehreren unterschiedliche Werkstoffe gleichen oder verschiedenen Ausgangsmaterials und/oder Energieeintrags gemischt oder einer zweiten Mahlung oder mehreren Mahlungen unterzogen werden.

23. Verfahren zur Herstellung eines Werkstoffes nach Ansprüchen 16 bis 21, **dadurch gekennzeichnet, dass** ein CNT-freies Metall oder Kunststoff und ein Werkstoff oder mehrere unterschiedliche Werkstoffe gleichen oder verschiedenen Ausgangsmaterials und/oder Energieeintrags, gemischt oder einer zweiten Mahlung oder mehreren Mahlungen unterzogen werden.

24. Verwendung des Werkstoffes nach Anspruch 1 für durch Sprühkompaktieren, thermische Spritzverfahren, Plasmasprühen, Extrusionsverfahren, Sinterverfahren, druckgesteuerte Infiltrationsverfahren oder Pressgiessen hergestellte Formkörper.

## Claims

1. Material comprising carbon nanotubes (CNT) and at least one metal and/or at least one plastics material, layered in the material alternately with layers of CNT, **characterised in that** the individual layers of the metal and/or of the plastics material have a thickness of 10 nm to 500,000 nm and the thicknesses of the individual layers of CNT are 10 nm to 100,000 nm.

2. Material according to claim 1, **characterised in that** the material is in the form of particles.

3. Material according to claims 1 and 2, **characterised in that** the particle size of the material is 0.5 µm to 2,000 µm, advantageously 1 µm to 1,000 µm.

4. Material according to claims 1 to 3, **characterised in that** the individual layers of the metal or of the plastics material have a thickness of 20 nm to 200,000 nm.

5. Material according to claims 1 to 4, **characterised in that** the thicknesses of the individual layers of CNT are 20 nm to 50,000 nm

6. Material according to claims 1 to 5, **characterised in that** within the particles of the material, at least one metal or plastics material is layered alternately with layers of CNT in an evenly arranged layer thickness.

7. Material according to claims 1 to 5, **characterised in that** within the particles of the material, at least one metal or plastics material is layered alternately with layers of CNT, regions with a high concentration of CNT layers and a low concentration of metal or plastics material layers being present within the particle.

8. Material according to claims 1 to 7, **characterised in that** a plurality of CNT layers contact one another in partial regions throughout the particles of the material and form continuous CNT permeations through the particles.

9. Material according to claims 1 to 8, **characterised in that** ferrous and non-ferrous metals, noble metals, expediently ferrous metals from the group of iron, cobalt and nickel, the alloys thereof and steels, non-ferrous metals, expediently aluminium, magnesium and titanium and the alloys thereof, metals from the group of vanadium, chromium, manganese, copper, zinc, tin, tantalum or tungsten and alloys thereof or alloys from the group of brass and bronze or metals from the group of rhodium, palladium, platinum, gold and silver, either alone or mixtures thereof, are comprised as a metal.

10. Material according to claims 1 to 8, **characterised in that** thermoplastic, elastic or thermosetting polymers, preferably polyolefins, cycloolefin coplymers, polyamides, polyester, polyacryl nitrile, polystyrenes, polycarbonates, polyvinyl chloride, polyvinyl acetate, styrene butadiene copolymers, acryl nitrile butadiene copolymers, polyurethanes, polyacrylates and copolymers, alkyd resins, epoxides, phenol formaldehyde resins, urea formaldehyde resins, either alone or mixtures thereof, are comprised as polymers.

11. Material according to claims 1 to 9, **characterised in that** aluminium or alloys thereof are used as a metal.

12. Material according to claims 1 to 11, **characterised in that** the CNT have a diameter of 0.4 nm to 50 nm and a length of 5 nm to 50,000 nm.

13. Material according to claims 1 to 12, **characterised in that** the CNT are 2- or 3-dimensional frameworks of carbon nanotubes, preferably frameworks with side lengths of 10 nm to 50,000 nm.

14. Material according to claims 1 to 13, **characterised in that** the material comprises CNT in an amount of 0.1 to 50 % by weight based on the material, expediently comprises CNT in an amount of 0.3 to 40 % by weight, preferably comprises CNT in an amount of 0.5 to 20 % by weight and in particular comprises CNT in an amount of 1 to 6 % by weight.

15. Material according to claims 1 to 14, **characterised in that** aluminium or an aluminium alloy is the metal in the material, and the material comprises 0.5 to 10 % by weight CNT, preferably 3 to 6 % by weight CNT.

16. Method of preparing a material according to claim 1, **characterised in that** the proportions of metal and/or plastics material and CNT are each processed in the form of granulates, particles or powders by mechanical alloying.

17. Method of preparing a material according to claim 16, **characterised in that** the mechanical alloying is performed by repeated deformation, fracturing and welding of the metal or plastics material particles and the CNT particles, preferably by mechanical alloying by means of high-energy ball collisions in a ball mill comprising a milling chamber and milling balls as milling elements.

18. Method of preparing a material according to claims 16 and 17, **characterised in that** the ball mill comprises a milling chamber with a cylindrical, preferably circular cylindrical cross-section and the milling balls are moved through milling chambers, which rotate about the cylinder axes thereof, and accelerated by a driven rotating element, which extends into the milling chamber in the direction of the cylinder axis and is equipped with a plurality of cams.

19. Method of preparing a material according to claims 16 to 18, **characterised in that** the speed of the milling balls is at least 11 m/s and advantageously 11 to 14 m/s.

20. Method of preparing a material according to claims 16 to 19, **characterised in that** milling lasts for 10 hours and less and the minimum milling duration is 5 min, and milling preferably lasts for between 15 min and 5 hours, particularly preferably from 30 min to 3 hours and in particular up to 2 hours.

21. Method of preparing a material according to claims 16 to 20, **characterised in that** the rotating element comprises a plurality of cams distributed along the entire length thereof and advantageously extends over the entire milling chamber along the cylinder axis thereof.

22. Method of preparing a material according to claims 16 to 21, **characterised in that** two or more different materials of the same or different starting material and/or energy input are mixed or subjected to a second milling or a plurality of millings.

23. Method of preparing a material according to claims 16 to 21, **characterised in that** a CNT-free metal or plastics material and a material or a plurality of different materials of the same or different starting material and/or energy input are mixed or subjected to a second milling or a plurality of millings.

24. Use of the material according to claim 1 for moulds produced by spray forming, thermal spray processes, plasma spraying, extrusion methods, sintering methods, pressure-controlled infiltration methods or pressure casting.

## Revendications

1. Matériau renfermant des nanotubes de carbone (CNT) et au moins un métal et/ou au moins une matière plastique, qui, dans le matériau, est ou sont agencés de manière stratifiée en couches alternativement avec des couches de CNT,
**caractérisé en ce que** les couches individuelles du métal et/ou de la matière plastique présentent une épaisseur de 10 nm à 500'OOO nm, et les épaisseurs des couches individuelles des CNT ont une valeur jusqu'à 100'000 nm.

2. Matériau selon la revendication 1, **caractérisé en ce que** le matériau se présente sous la forme de particules.

3. Matériau selon les revendications 1 et 2, **caractérisé en ce que** la grosseur de particule du matériau vaut de 0,5 µm à 2000 µm, de préférence de 1 µm à 1000 µm.

4. Matériau selon les revendications 1 à 3, **caractérisé en ce que** les couches individuelles du métal ou de la matière plastique présentent une épaisseur de 20 nm à 200'000 nm.

5. Matériau selon les revendications 1 à 4, **caractérisé en ce que** les épaisseurs des couches individuelles de CNT ont une valeur de 20 nm à 50'000 nm.

6. Matériau selon les revendications 1 à 5, **caractérisé en ce qu'**à l'intérieur des particules du matériau, au moins un métal ou une matière plastique est ou sont agencés de manière stratifiée en couches alternativement avec des couches de CNT selon des épaisseurs de couche régulières.

7. Matériau selon les revendications 1 à 5, **caractérisé en ce qu'**à l'intérieur des particules du matériau, au moins un métal ou une matière plastique est ou sont agencés de manière stratifiée en couches alternativement avec de couches de CNT, et dans la particule existent des zones avec une forte concentration en couches de CNT et de faible concentration en couches de métal ou de matière plastique.

8. Matériau selon les revendications 1 à 7, **caractérisé en ce qu'**à travers les particules du matériau plusieurs couches de CNT se touchent en des zones partielles, et forment des infiltrations ininterrompues de CNT traversant la particule.

9. Matériau selon les revendications 1 à 8, **caractérisé en ce qu'**il renferme en tant que métaux, des métaux ferreux et non ferreux, des métaux précieux, utilement des métaux ferreux de la lignée fer, cobalt et nickel, leurs alliages, ainsi que des aciers, des métaux non ferreux, utilement l'aluminium, le magnésium et le titane ainsi que leurs alliages, des métaux de la lignée vanadium, chrome, manganèse, cuivre, zinc, étain, tantale ou tungstène (wolfram) et des alliages de ceux-ci, ou les alliages de la lignée laiton et bronze, ou des métaux de la lignée rhodium, palladium, platine, or et argent, sous forme pure ou de mélanges d'entre eux.

10. Matériau selon les revendications 1 à 8, **caractérisé en ce qu'**il renferme en guise de polymères, des polymères thermoplastiques, élastiques ou thermodurcissables, de préférence des polyoléfines, des copolymères de cyclo-oléfines, des polyamides, des polyesters, poly-acryle-nitrile, des polystyrènes, des polycarbonates, du chlorure de polyvinyle, de l'acétate de polyvinyle, des copolymères butadiène-styrène, des copolymères butadiène-acryle-nitrile, des polyuréthannes, des polyacrylates et copolymères, des résines alkydes, des époxydes, des résines phénol-formol, des résines urée-formol, sous forme pure ou sous forme de mélanges d'entre eux.

11. Matériau selon les revendications 1 à 9, **caractérisé en ce que** l'on met en oeuvre en guise de métal, de l'aluminium ou ses alliages.

12. Matériau selon les revendications 1 à 11, **caractérisé en ce que** les CNT présentent un diamètre de 0,4 nm à 50 nm, et une longueur de 5 nm à 50'000 nm.

13. Matériau selon les revendications 1 à 12, **caractérisé en ce que** les CNT forment des corps de structure à deux ou trois dimensions en nanotubes de carbone, de préférence des corps de structure présentant des côtés d'une longueur de 10 nm à 50'000 nm.

14. Matériau selon les revendications 1 à 13, **caractérisé en ce que** le matériau renferme des quantités de CNT de 0,1 à 50% en poids rapporté au matériau, utilement des quantités de CNT de 0,3 à 40% en poids, de préférence des quantités de CNT de 0,5 à 20% en poids, et notamment des quantités de CNT de 1 à 6% en poids.

15. Matériau selon les revendications 1 à 14, **caractérisé en ce que** l'aluminium ou un alliage d'aluminium représente le métal du matériau, et le matériau renferme 0,5 à 10% en poids de CNT, de préférence 3 à 6% en poids de CNT.

16. Procédé pour la fabrication d'un matériau selon la revendication 1, **caractérisé en ce que** les parts de métal et/ou de matière plastique et de CNT respectivement sous la forme de granulés, de particules ou de poudres, sont traitées et transformées par une opération mécanique de formation d'alliage.

17. Procédé pour la fabrication d'un matériau, selon la revendication 16, **caractérisé en ce que** l'opération mécanique de formation d'alliage est effectuée par déformation, fractionnement et soudage répétés des particules de métal ou de matière plastique et des particules de CNT, de préférence par une opération mécanique de formation d'alliage dans un broyeur à boulets comprenant une chambre de broyage et des boulets de broyage en tant que corps de broyage, par collisions hautement énergétiques des boulets.

18. Procédé pour la fabrication d'un matériau, selon les revendications 16 et 17, **caractérisé en ce que** le broyeur à boulets comporte une chambre de broyage présentant une section de forme cylindrique, de préférence cylindrique circulaire, et les boulets de broyage sont déplacés à travers la chambre de broyage tournant autour de son axe de cylindre, et sont accélérés par un corps rotatif entraîné, qui s'étend dans la chambre de broyage dans la direction de l'axe de cylindre, et est équipé d'une pluralité de bossages.

19. Procédé pour la fabrication d'un matériau, selon les revendications 16 à 18, **caractérisé en ce que** la vitesse des boulets de broyage est d'une valeur d'au moins 11 m/s, et la vitesse des boulets de broyage est avantageusement d'une valeur de 11 à 14 m/s.

20. Procédé pour la fabrication d'un matériau, selon les revendications 16 à 19, **caractérisé en ce que** la durée de broyage est d'une valeur de 10 heures et moins, et la valeur minimale de la durée de broyage est de 5 min, et la durée de broyage est de préférence d'une valeur comprise entre 15 min et 5 heures, de manière particulièrement préférée de 30 min à 3 heures, et notamment jusqu'à 2 heures.

21. Procédé pour la fabrication d'un matériau, selon les revendications 16 à 20, **caractérisé en ce que** le corps rotatif présente une pluralité de bossages répartis sur toute la longueur, et s'étend avantageusement sur toute l'étendue de la chambre de broyage dans la direction de l'axe de cylindre.

22. Procédé pour la fabrication d'un matériau, selon les revendications 16 à 21, **caractérisé en ce que** deux ou plusieurs matériaux différents de matières initiales identiques ou différentes et/ou ayant subi un apport d'énergie identique ou différent, sont mélangés ou soumis à un deuxième broyage ou à plusieurs broyages.

23. Procédé pour la fabrication d'un matériau, selon les revendications 16 à 21, **caractérisé en ce qu'**un métal ou une matière plastique exempts de CNT et un matériau ou plusieurs matériaux différents de matières initiales identiques ou différentes et/ou ayant subi un apport d'énergie identique ou différent, sont mélangés ou soumis à un deuxième broyage ou à plusieurs broyages.

24. Utilisation du matériau selon la revendication 1 pour des pièces de forme ou pièces de moulage fabriquées par compactage par projection, par des procédés d'injection ou de pulvérisation thermiques, par projection au plasma, par des procédés d'extrusion, des procédés de frittage, des procédés d'infiltration à pression contrôlée, ou par moulage sous pression.
